# EUROPEAN PATENT APPLICATION

(11) **EP 0 755 854 A1**
(43) Date of publication of application: **29.01.1997**
(21) Application number: 95305175.2
(22) Date of filing: 25.07.1995
(51) Int. Cl.: B62M 23/02

(54) **Electrical drive for a bicycle**

(71) Applicant: MERIDA INDUSTRY CO., LTD., Meikang Village, Tatsun Hsiang, Changhua Hsien (TW)
(72) Inventor: Tseng, Diing-Huang, Tatsun Hsiang, Changhua Hsien (TW)
(74) Representative: Roberts, Gwilym Vaughan

(57) **Abstract**

An electrical actuating mechanism includes a housing (12) fixedly mounted between a down tube (60) and a pair of chain stays (61) of a bicycle. A crank axle (40) is rotatably mounted in a compartment (121) which is defined in the housing (12). A drive shaft (30) is rotatably mounted around the crank axle (40) and a pair of first single direction thrust bearings (31) are each mounted therebetween. A worm wheel (20) is rotatably mounted around the drive shaft (30) and a second single direction thrust bearing (21) is mounted therebetween. A motor (10) is connected with the housing (12) and has a motor shaft (102) whose one distal end is fixedly mounted in a worm (11) which meshes with the worm wheel (20). A cell box (101) is provided for supplying power to the motor (10).

## Description

The present invention relates to an electrical drive, and more particularly to an electrical drive for a bicycle.

A conventional electrical actuating mechanism for a bicycle is complex in construction, so causing a difficulty when maintenance is required.

The present invention has arisen to mitigate and/or obviate the disadvantages of the conventional electrical actuating mechanism.

The primary objective of the present invention is to provide an electrical actuating mechanism which has a simplified construction and is easily operated.

According to the present invention there is provided an electrical drive for a bicycle which comprises a down tube, a pair of chain stays, a crank axle rotatably mounted between said down tube and said pair of chain stays, two crank arms each on a respective first and second end of said crank axle, a chain wheel mounted on the first end of said crank axle, and a drive chain meshing with said chain wheel to move therewith, said electrical drive comprising:
a housing fixedly mounted between said down tube and said pair of chain stays and having a compartment provided therein and bounded by an inner wall of the housing, said crank axle being rotatably mounted in said compartment with the ends thereof extending outwards of said housing;
a drive shaft rotatably mounted around said crank axle and having a first end extending out of said housing and a second end received in said compartment, said chain wheel being fixedly mounted around the first end of said drive shaft;
a pair of first single direction thrust bearings each mounted between said crank axle and said drive shaft;
a worm wheel received in said compartment and rotatably mounted around said drive shaft;
a second single direction thrust bearing mounted between said worm wheel and said drive shaft;
a worm received in said compartment located above and meshing with said worm wheel;
a motor mounted on said down tube and connected with said housing, a motor shaft rotatably mounted in said motor on one distal end of which said worm is provided; and
a cell box mounted on said down tube for supplying power to said motor.

In accordance with one aspect of the present invention, there is provided an electrical actuating mechanism for a bicycle which comprises a down tube, a pair of chain stays, a crank axle rotatably mounted between the down tube and the pair of chain stays, two crank arms each fixedly mounted around a corresponding end of the crank axle, a chain wheel mounted on one distal end of the crank axle, and a drive chain meshing with the chain wheel to move therewith.

The electrical actuating mechanism comprises a housing fixedly mounted between the down tube and the pair of chain stays and having a compartment defined in an inner wall thereof. The crank axle is rotatably mounted in the compartment. A drive shaft is rotatably mounted around the crank axle. The chain wheel is fixedly mounted around one distal end of the drive shaft. A pair of first single direction thrust bearings each are mounted between the crank axle and the drive shaft.

A worm wheel is rotatably mounted around the drive shaft. A second single direction thrust bearing is mounted between the worm wheel and the drive shaft. A worm is received in the compartment and meshes with the worm wheel. A motor is fixedly mounted on the down tube and is connected with the housing. A motor shaft is rotatably mounted in the motor and has one distal end fixedly mounted in the worm. A cell box is fixedly mounted on the down tube for supplying power to the motor.

An embodiment of the invention will now be described by way of example with reference to the drawings of which:
Fig. 1 is a side view of an electrical actuating mechanism for a bicycle in accordance with the present invention;
Fig. 2 is a top view of the actuating mechanism;
Fig. 3 is an enlarged top view of a portion of the actuating mechanism;
Fig. 4 is an enlarged side view of a portion of the actuating mechanism;
Fig. 5 is a cross-sectional view of the actuating mechanism taken from the front of the bicycle; and
Fig. 6 is a cross-sectional view of a portion of the actuating mechanism taken from the side of the bicycle.

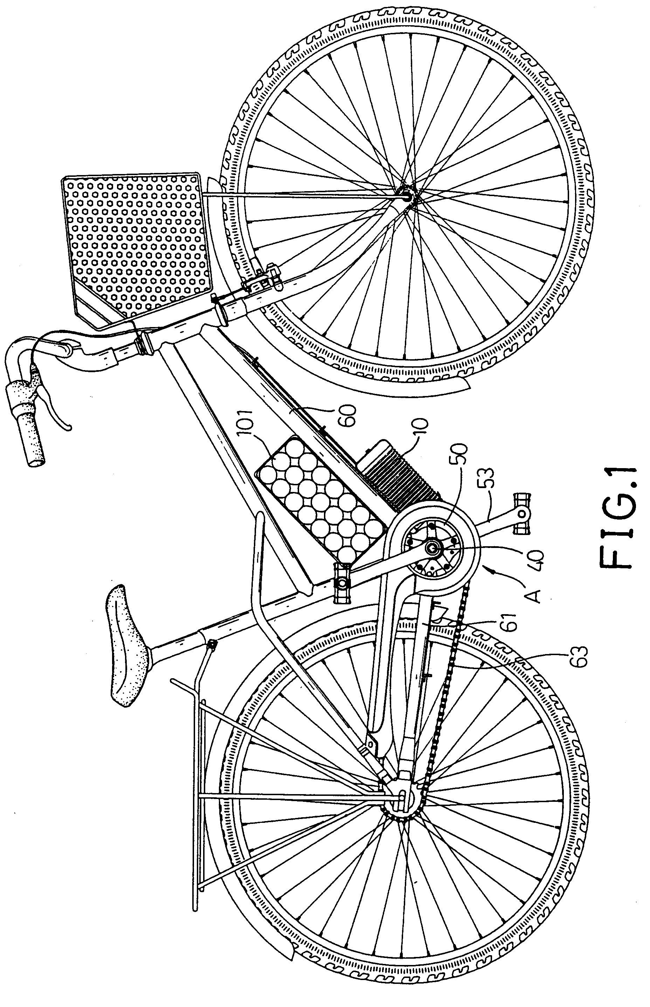

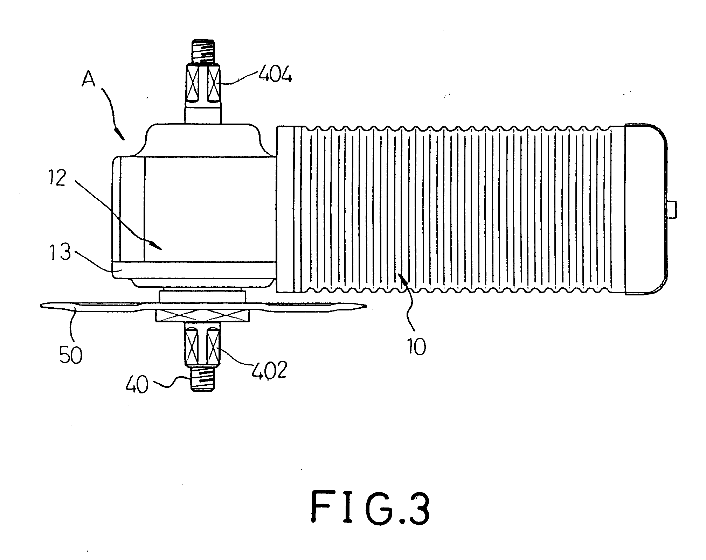

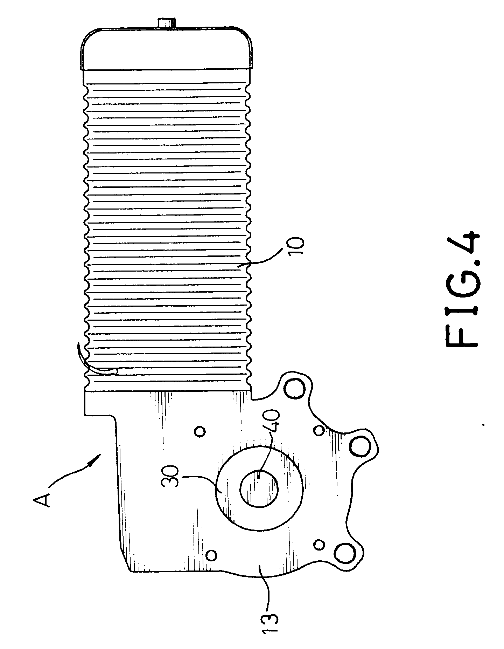

Referring to the drawings, and initially to Figs. 1-4, an electrical actuating mechanism A in accordance with the present invention is provided for a bicycle which comprises a down tube 60, a pair of chain stays 61, a crank axle 40 rotatably mounted between the down tube 60 and the pair of chain stays 61 and having first and second ends 402 and 404, two crank arms 53 each fixedly mounted around a corresponding one of the first and second ends 402 and 404 of the crank axle 40, a chain wheel 50 mounted on the first end 402 of the crank axle 40, and a drive chain 63 meshing with the chain wheel 50 to move therewith.

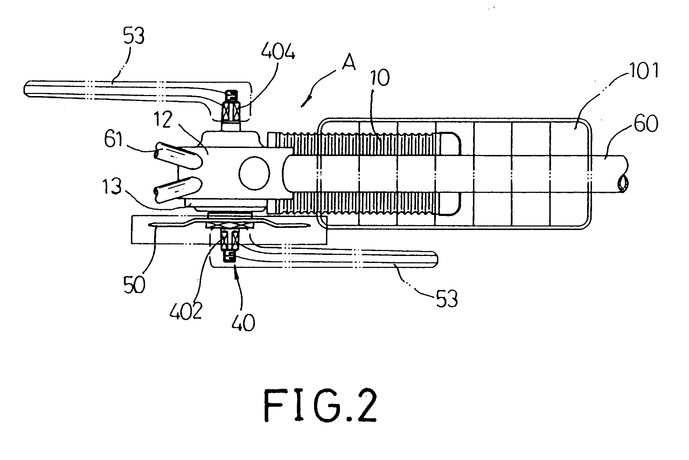

Referring to Fig.s 5 and 6 with reference to Figs. 1 and 2, the electrical actuating mechanism comprises a housing 12 fixedly mounted between the down tube 60 and the pair of chain stays 61 and having a compartment 121 defined in an inner wall thereof. The crank axle 40 is rotatably mounted in the compartment 121 with the first and second ends 402 and 404 thereof extending outwards of the housing 12.

A drive shaft 30 is rotatably mounted around the crank axle 40 and has a first end 302 extending outwards of the housing 12 and a second end 304 received in the compartment 121. The chain wheel 50 is fixedly mounted around the first end 302 of the drive shaft 30. A pair of first single direction thrust bearings 31 each are mounted between the crank axle 40 and the drive shaft 30. A worm wheel 20 is received in the compartment 121 and is rotatably mounted around the drive shaft 30. A second single direction thrust bearing 21 is mounted between the worm wheel 20 and the drive shaft 30. A worm 11 located above the worm wheel 20 is received in the compartment 121 and meshes with the worm wheel 20.

A motor 10 is fixedly mounted on the down tube 60 and is connected with the housing 12. A motor shaft 102 is rotatably mounted in the motor 10 and has one distal end fixedly mounted in the worm 11 such that the worm 11 is able to rotate with the motor shaft 102, thereby rotating the worm wheel 20. A cell box 101 is fixedly mounted on the down tube 60 for supplying power to the motor 10.

Preferably, a pair of retaining blocks 22 are each fixedly mounted around the drive shaft 30 for positioning the worm wheel 20 therebetween. A cap 13 is mounted around the drive shaft 30 and is laterally coupled to the housing 12, thereby enclosing the compartment 121 thereof. A first bearing 33 is received in the compartment 121 and is rotatably mounted between the first end 302 of the drive shaft 30 and an inner wall of the cap 13. A snapping member 23 is fixedly mounted around the drive shaft 30 for retaining the first bearing 33.

A second bearing 331 is received in the compartment 121 and is rotatably mounted between the second end 404 of the crank axle 40 and the inner wall of the housing 12. A pair of stops 25 each are fixedly mounted on the inner wall of the housing 12 and on the second end 404 of the crank axle 40 respectively for positioning the second bearing 331 therebetween.

In addition, a flange portion 32 is formed on the first end 302 of the drive shaft 30 for limiting movement of the chain wheel 50 which is mounted around an outer threaded portion 321 which protrudes outwardly from the flange portion 32. A nut 52 is threadedly engaged around the outer threaded portion 321 for positioning the chain wheel 50. Moreover, a washer 41 is fitted between the first end 302 of the drive shaft 30 and the first end 402 of the crank axle 40 for sealing effect therebetween.

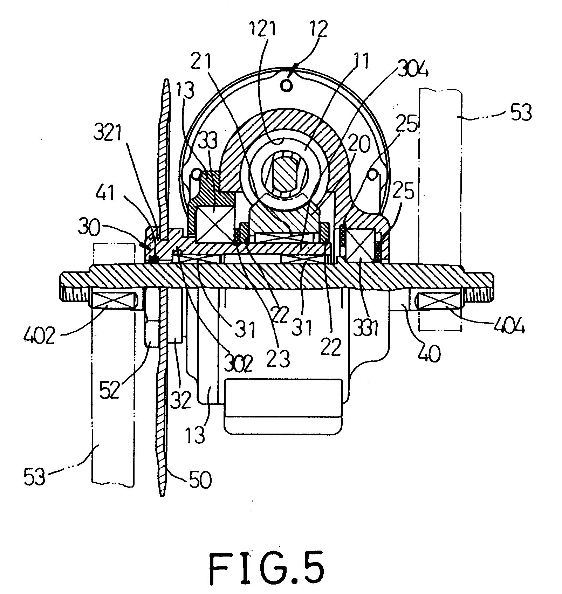

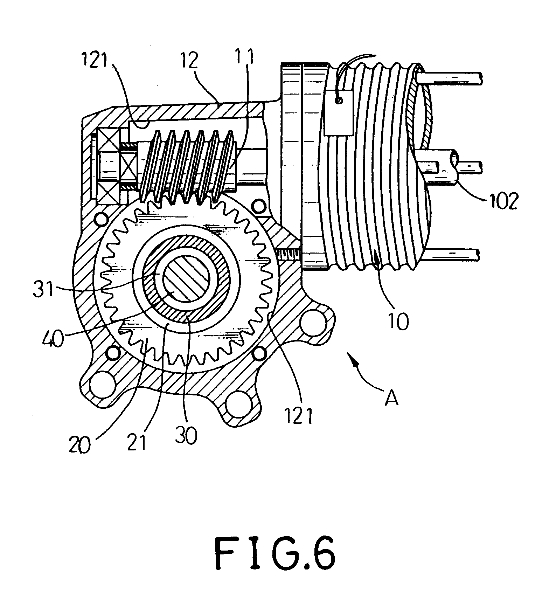

In operation, referring to Figs. 5 and 6, it is appreciated to describe operations of the first and second single direction thrust bearings 31 and 21 in the following way.

The first and second single direction thrust bearings 31 and 21 are operated in an opposite direction to each other. In other words, if the first single direction thrust bearing 31 is operated to move in a clockwise direction and idles in a counterclockwise direction, the second single direction thrust bearing 21 is then operated to move in the counterclockwise direction and idles in the clockwise direction.

Now, especially referring to Fig. 6, assume the second single direction thrust bearing 21 is operated to move clockwise and idles counterclockwise. Therefore, the first single direction thrust bearing 31 is operated to move counterclockwise and idles clockwise.

When the worm wheel 20 is rotated clockwise, then the second single direction thrust bearing 21 is operated to rotate the drive shaft 30 clockwise therewith, and when the worm wheel 20 is rotated counterclockwise, then the second single direction thrust bearing 21 idles and the drive shaft 30 stops rotating.

On the contrary, when the drive shaft 30 is rotated clockwise, the second single direction thrust bearing 21 idles and the worm wheel 20 is not rotated, and when the drive shaft 30 is rotated counterclockwise, the second single direction thrust bearing 21 is operated to rotate the worm wheel 20 counterclockwise therewith.

When the drive shaft 30 is rotated clockwise, then the first single direction thrust bearing 31 idles and the crank axle 40 is not rotated, and wen the drive shaft 30 is rotated counterclockwise, then the first single direction thrust bearing 31 is operated to rotate the crank axle 40 counterclockwise therewith.

On the contrary, when the crank axle 40 is rotated clockwise, the first single direction thrust bearing 31 is operated to rotate the drive shaft 30 clockwise, and when the crank axle 40 is rotated counterclockwise, the first single direction thrust bearing 31 idles and the drive shaft 30 stops rotating.

Now, referring to Fig.s 5 and 6 with reference to Fig. 1, the motor shaft 102 is rotated by means of the motor 10 so as to rotate the worm 11, thereby rotating the worm wheel 20 clockwise which is then able to rotate the drive shaft 30 clockwise by means of the second single direction thrust 21, thereby in turn rotating the chain wheel 50 which is able to move the drive chain 63, thereby driving the bicycle to move forwardly.

In the meantime, the crank axle 40 is not rotated due to the first single direction thrust bearing 31 idling. By such an arrangement, the bicycle is actuated to move essentially by means of the motor 10 without requiring to exert any force on the crank axle 40 by a user, thereby greatly reducing consumption in manual manipulation.

When the motor 10 stops operation, the crank axle 40 is able to be rotated clockwise by the user via the crank arms 53, thereby rotating the drive shaft 30 clockwise by means of the first single direction thrust bearing 31 so as to rotate the chain wheel 50 and move the drive chain 63, thereby moving the bicycle forwardly.

In the meantime, the worm wheel 20 is not operated due to the second single direction thrust bearing 21 idling. By such an arrangement, the bicycle is actuated to move entirely by exertion of a user without an assistance of electricity.

Further, the drive shaft 30 is able to be actuated to rotate clockwise by means of the motor 10 and the crank axle 40 synchronously. In other words, the bicycle is actuated to move by electricity and exertion of a user synchronously and alternately.

## Claims

1. An electrical drive for a bicycle which comprises a down tube (60), a pair of chain stays (61), a crank axle (40) rotatably mounted between said down tube (60) and said pair of chain stays (61), two crank arms (53) each on a respective first and second end (402,404) of said crank axle (40), a chain wheel (50) mounted on the first end (402) of said crank axle (40), and a drive chain (63) meshing with said chain wheel (50) to move therewith, said electrical drive comprising:
a housing (12) fixedly mounted between said down tube (60) and said pair of chain stays (61) and having a compartment (121) provided therein and bounded by an inner wall of the housing (12), said crank axle (40) being rotatably mounted in said compartment (121) with the ends (402,404) thereof extending outwards of said housing (12);
a drive shaft (30) rotatably mounted around said crank axle (40) and having a first end (302) extending out of said housing (12) and a second end (304) received in said compartment (121), said chain wheel (50) being fixedly mounted around the first end (302) of said drive shaft (30);
a pair of first single direction thrust bearings (31) each mounted between said crank axle (40) and said drive shaft (30);
a worm wheel (20) received in said compartment (121) and rotatably mounted around said drive shaft (30);
a second single direction thrust bearing (21) mounted between said worm wheel (20) and said drive shaft (30);
a worm (11) received in said compartment (121) located above and meshing with said worm wheel (20);
a motor (10) mounted on said down tube (60) and connected with said housing (12), a motor shaft (102) rotatably mounted in said motor (10) on one distal end of which said worm (11) is provided; and
a cell box (101) mounted on said down tube (60) for supplying power to said motor (10).

2. An electrical drive as claimed in claim 1, further comprising a first bearing (33) received in said compartment (121) and rotatably mounted between the first end (302) of said drive shaft (30) and the inner wall of said housing (12) and a second bearing (331) received in said compartment (121) and rotatably mounted between the second end (404) of said crank axle (40) and the inner wall of said housing (12).

3. An electrical drive as claimed in claim 1 or claim 2, further comprising a pair of retaining blocks (22) each fixedly mounted around said drive shaft (30) for positioning said worm wheel (20) therebetween.
